# EUROPEAN PATENT APPLICATION

(11) **EP 1 768 112 A1**
(43) Date of publication of application: **28.03.2007**
(21) Application number: 06019570.8
(22) Date of filing: 19.09.2006
(51) Int. Cl.: G11B 5/738, G11B 5/84

(54) **Perpendicular magnetic recording medium and method for manufacturing the same**

(30) Priority: 22.09.2005 JP 2005274995
(71) Applicant: FUJIFILM Corporation, Minato-ku Tokyo (JP)
(72) Inventor: Waki, Koukichi, c/o Fuji Photo Film Co., Ltd., Minami-Ashigara-shi, Kanagawa (JP)
(74) Representative: HOFFMANN EITLE

(57) **Abstract**

A perpendicular magnetic recording medium including: at least one soft magnetic layer and at least one hard magnetic layer on at least one surface of a non-magnetic support, wherein the soft magnetic layer contains magnetic nanoparticles having longitudinal coercive force of 1.6 kA/m to 16 kA/m at 25°C

## Description

### BACKGROUND OF THE INVENTION

### Field of the Invention

The present invention relates to a perpendicular magnetic recording medium, and particularly to a perpendicular magnetic recording medium having a nanoparticle soft magnetic layer and a method for manufacturing the same.

### Description of the Related Art

Personal computers and information instruments have been miniaturized in recent years, and furthermore, the portability for achieving ubiquitous usage is being demanded. Therefore, a super-high density and small magnetic recording device for accumulating more information is needed.
The perpendicular magnetic recording method has attracted attention as an alternative technology that achieves the densification of magnetic recording to the conventional longitudinal magnetic recording method. The perpendicular magnetic recording medium has a basic composition in which a perpendicularly oriented hard magnetic layer is arranged on a longitudinally oriented soft magnetic layer.
Although a large number of patent documents concerning the perpendicular magnetic recording medium have been disclosed, most of the methods for manufacturing the medium in these documents are thin film forming methods using the sputtering method. In the thin film forming method using the sputtering technique, because it is difficult to directly obtain a perpendicularly oriented magnetic layer, techniques such as preparing a foundation layer to control the orientation is necessary.

For example, in Japanese Patent Application Laid-Open (JP-A) Nos. 2001-167423, 2001-283428, 2002-25044, and 2002-100030, foundation layers for promoting a perpendicular orientation in the sputtering method are disclosed. However, these methods have the drawback of complicating the layer composition and have not achieved an ideal perpendicular orientation.

Moreover, soft magnetic layers formed by the sputtering method are disclosed in JP-A Nos. 5-250651 and 2002-42318. Although these layers are intended to achieve high density by decreasing noise, the noise removal is insufficient. In JP-A Nos. 2002-312924 and 2002-342909, while low noise is intended by forming a more complicated layer structure, there is a problem that many processes are needed in the manufacture and costs are increased.

Technology to improve the perpendicular orientation of the hard magnetic layer is disclosed in JP-A No. 2004-362746. In this document, a layer lined with a soft magnetic material is manufactured by the plating method, the sputtering method, the evaporation method or the CVD (Chemical Vapor Deposition) method, and a recording layer containing a soft magnetic nanoparticle layer and hard magnetic nanoparticles, which are isolated by a carbon phase at an intermediate layer, is provided by the spin coating method or the dipping method using a solvent. Further, a protective layer is prepared by the plating method, the sputtering method, the evaporation method, or the CVD method, and a lubricating layer is prepared by the spin coating method or the dipping method using a solvent. In this method, the soft magnetic nanoparticle layer at the intermediate layer is prepared so as to intercept the magnetostatic interaction of the hard magnetic layer and the layer lined with a soft magnetic material, and disclosed for the same purpose as the non-magnetic intermediate layer seen in the above-mentioned JP-A Nos. 2002-312924, 2002-342909, and the like.
However, in the invention disclosed in JP-A No. 2004-362746, because (1) the film strength of the intermediate layer structure, where the carbon phase has been made continuous phase, is insufficient, (2) the manufacturing method of the layer lined with a soft magnetic material differs completely from that of the soft magnetic nanoparticle intermediate layer and, further, (3) the recording layer, the protective layer, and the like over the intermediate layer are not manufactured by a consistent method, the manufacturing process is complicated and low in productivity, and costs are high.

### SUMMARY OF THE INVENTION

The invention has been performed to address various problems in the above-mentioned conventional techniques, and provides a perpendicular magnetic recording medium with low noise and high density. Moreover, the invention provides a method for manufacturing the perpendicular magnetic recording medium having such features easily and at low cost.
According to a first aspect of the invention, there is provided a perpendicular magnetic recording medium comprising: at least one soft magnetic layer and at least one hard magnetic layer on at least one surface of a non-magnetic support, wherein the soft magnetic layer comprises magnetic nanoparticles having a longitudinal coercive force of from 1.6 kA/m to 16 kA/m at 25°C.
According a second aspect of the invention, there is provided the perpendicular magnetic recording medium according to the first aspect, wherein the magnetic nanoparticles contained in the soft magnetic layer comprise iron nitride magnetic nanoparticles represented by the following Formula (a) or alloy magnetic nanoparticles represented by the following Formula (b);

Formula (a): Fe_{100-x-y}Nₓ(Sm or Y)_{y}

Formula (b): Fe₁₀₀₋ₘ₋ₙ(Pt or Co)ₘ(Cu, Ag, or Ni)ₙ,

wherein, x indicates an area of from 10% by atom to 30% by atom, y an area of from 0% by atom to 10% by atom, m an area of from 25% by atom to 75% by atom, and n an area of from 0% by atom to 60% by atom, with the provision that m + n < 100.
According to a third aspect of the invention, there is provided the perpendicular magnetic recording medium according to the second aspect, wherein the magnetic nanoparticles are selected from the group consisting of FePt, FePd, CoPt, Fe₃Pt, Co₃Pt, Ni₃Pt, Fe₂N, Fe₃N, Fe₄N, Fe₁₆YN, Fe₂YN, Fe₁₆SmN, Fe₂SmN, Fe₃SmN, and Fe₁₆N₂.
According to a fourth aspect of the invention, there is provided the perpendicular magnetic recording medium according to the first aspect, wherein the average particle diameter of the magnetic nanoparticles is from 1 nm to 30 nm.
According to a fifth aspect of the invention, there is provided the perpendicular magnetic recording medium according to the first or second aspect, wherein the hard magnetic layer is a nanoparticle magnetic layer that is perpendicularly oriented by being dried in a magnetic field or by being annealed in a magnetic field.
According to a sixth aspect of the invention, there is provided the perpendicular magnetic recording medium according to the first or second aspect, wherein an intermediate layer is formed between the soft magnetic layer and the hard magnetic layer.
According to a seventh aspect of the invention, there is provided the perpendicular magnetic recording medium according to the sixth aspect, wherein the intermediate layer comprises soft magnetic nanoparticles.
According to an eighth aspect of the invention, there is provided the perpendicular magnetic recording medium according to the first or second aspect, wherein the soft magnetic layer is a non-magnetic layer.
According to a ninth aspect of the invention, there is provided the perpendicular magnetic recording medium according to the first or second aspect, wherein a protective layer is further formed on the hard magnetic layer.
According to a tenth aspect of the invention, there is provided the perpendicular magnetic recording medium according to the ninth aspect, further comprising a lubricant layer.
According to an eleventh of the invention, there is provided a method for manufacturing the perpendicular magnetic recording medium according to the first aspect, comprising: applying the soft magnetic layer and the hard magnetic layer on at least one surface of the support by using a solvent according to a coating method or a dipping method; and drying the coated layer.
According to a twelfth of the invention, there is provided the method for manufacturing the perpendicular magnetic recording medium according to the eleventh aspect,
wherein the magnetic nanoparticles contained in the soft magnetic layer comprise iron nitride magnetic nanoparticles represented by the following Formula (a) or alloy magnetic nanoparticles represented by the following Formula (b);

Formula (a): Fe_{100-x-y}Nₓ(Sm or Y)_{y}

Formula (b): Fe₁₀₀₋ₘ₋ₙ(Pt or Co)ₘ(Cu, Ag, or Ni)ₙ,

wherein, x indicates an area of from 10% by atom to 30% by atom, y an area of from 0% by atom to 10% by atom, m an area of from 25% by atom to 75% by atom, and n an area of from 0% by atom to 60% by atom, with the provision that m + n < 100.
According to a thirteenth aspect of the invention, there is provided the method for manufacturing the perpendicular magnetic recording medium according to the eleventh aspect,
wherein the hard magnetic layer is a nanoparticle magnetic layer that is perpendicularly oriented by being dried in a magnetic field or by being annealed in a magnetic field.
According to a fourteenth aspect of the invention, there is provided the method for manufacturing the perpendicular magnetic recording medium according to the eleventh aspect,
wherein the method comprises forming an intermediate layer between the soft magnetic layer and the hard magnetic layer by using a solvent according to a coating method or a dipping method.
According to a fifteenth aspect of the invention, there is provided a method for manufacturing the perpendicular magnetic recording medium according to the first aspect, comprising: forming a non-magnetic layer on at least one surface of the support by a coating method; forming a magnetic layer on the non-magnetic layer under a wet condition or after the non-magnetic layer has been dried; and drying the formed layers.

### DETAILED DESCRIPTION OF THE INVENTION

Hereinafter, the perpendicular magnetic recording medium having a nanoparticle soft magnetic layer of the invention and the manufacturing method thereof will be described in detail. Though the description of the composition requirements described below is to be performed based on the representative embodiment of the invention, the invention should not be limited to such an embodiment. Further, the range of numerical values indicated by the use of "to" in the specification means the range that contains the numerical values described before and after the "to" as the lower limit and the upper limit, respectively.

### 1. Soft magnetic nanoparticles

### (Particle size)

The average particle diameter of the soft magnetic nanoparticles in the invention is preferable to be 1 nm to 30 nm, and more preferable to be 3 nm to 20 nm. When the average particle diameter is smaller than the particle diameter within the above-mentioned range, it is not preferable because coersive force is not produced and the particles become paramagnetic. And, when the average particle diameter is larger than the particle diameter within the above-mentioned range, it is not preferable because the coercive force of the particles becomes too high.

### (Coercive force)

The longitudinal coercive force of the soft magnetic nanoparticles at 25°C is from1.6 kA/m to 16 kA/m, and preferable to be from 2.5 kA/m to 12 kA/m. Even if this value is too smaller or too larger than the above-mentioned range, the value influences the hard magnetic layer, and consequently perpendicular recording is difficult.

### (Composition)

If the soft magnetic nanoparticles in the invention show the above-mentioned coercive force, the particles consist of what kind of element can be acceptable. Though specific examples include particles shown below, the invention is not limited thereto.
In an embodiment of the invention, iron nitride magnetic nanoparticles represented by the following Formula (a) or alloy magnetic nanoparticles represented by the following Formula (b) are preferably used:

Formula (a): Fe_{100-x-y}Nₓ(Sm or Y)_{y}

Formula (b): Fe₁₀₀₋ₘ₋ₙ(Pt or Co)ₘ(Cu, Ag, or Ni)ₙ

wherein, x indicates an area of from10% by atom to 30% by atom, y an area of from 0% by atom to 10% by atom, m an area of from 25% by atom to 75% by atom, and n an area of from 0% by atom to 60% by atom, with the provision that m + n < 100.
Examples of the magnetic nanoparticles of the Formulae (a) and (b) include FePt, FePd, CoPt, Fe₃Pt, Co₃Pt, Ni₃Pt, Fe₂N, Fe₃N, Fe₄N, Fe₁₆YN, Fe₂YN, Fe₁₆SmN, Fe₂SmN, Fe₃SmN, and Fe₁₆N₂ are preferable.
Moreover, besides the above-mentioned nanoparticles, CoCrPt, Fe₁₄Nd₂B, BaFe₁₂O₁₉, surface passivated Fe, surface passivated Co, and the like are also preferably used.

### 2. Hard magnetic particles

The hard magnetic particles are not particularly limited so long as the particles have hard magnetism, but nanoparticles are preferable.
As the hard magnetic nanoparticles usable in the invention, alloy nanoparticles having the coefficient of variation of 20% or less in particle diameter and composition are preferable, those of 15% or less are more preferable, and those of 10% or less are further preferable. When the coefficient of variation is larger than 20%, the change in the coercive force is large, which causes the output decrease and the noise increase in the regeneration of the magnetic recording.
As the hard magnetic nanoparticles that can be used in the invention, alloy nanoparticles in which at least two kinds of metals are selected from the group VIII elements, the group IX elements, the group X elements, and the group XI elements in the periodic table are preferable. Further, the alloy nanoparticles the surface of which are oxidized, or the alloy nanoparticles a part of the surface of which is oxidized are also preferable.

The particle diameter is measured as follows.
The diluted metallic nanoparticles are put on Cu of 200 meshes, on which carbon film has been stuck, and dried, then a picture of the nanoparticles is taken to 100,000 times with TEM (trade name: 1200EX, manufactured by JEOL Ltd.). The negative film is measured with a particle diameter measuring instrument (trade name: KS-300, manufactured by Carl Zeiss Corp.), and the arithmetic average particle diameter and the coefficient of variation are calculated.
The composition is measured as follows.
The diluted nanoparticles are put on Ni of 300 meshes, on which carbon film has been stuck, and dried, then the composition analysis of the nanoparticles is conducted with FE-TEM/EDS (adding up the particle area for 30 seconds, and from the obtained spectrum, the composition of each metal is calculated with atomic % using the Filter Fit method, a built-in software of EDS) while observing the nanoparticles with FE-TEM (trade name: HF-2210, manufactured by Hitachi, Ltd.) by 500,000 times, and the composition ratio and the coefficient of variation (represented with Pt) are calculated.
The specific examples of the hard magnetic nanoparticles in the invention are shown in the following, but the invention is not limited thereto.
FePt, CoPt, FePd, CoPd, CoCrPt, CoCrPd, FeNiPt, FeCoPt, FePtCu, FePtAg, and FePtNi.

### 3. The method for preparing the nanoparticle

As a liquid phase synthetic method that can form the magnetic nanoparticle in the invention, when being classified by the sedimentation method, (1) an alcoholic reduction method in which primary alcohols are used, (2) a polyol reduction method in which a secondary alcohol, a tertiary alcohol, dihydric alcohol, or trihydric alcohol is used, (3) a thermal decomposition method, (4) an ultrasonic decomposition method, (5) a reduction method with a strong reducing agent, and the like may be used.
Further, when being classified by the reaction system, (6) a polymer existence method, (7) a high boiling point solvent method, (8) a normal micellization method, (9) a reverse micellization method, and the like may be used. Among these, a combination of (2) and (6), a combination of (5) and (6), and a combination of (5) and (9) are preferably used. Particularly, the reverse micellization method is preferable from the viewpoint of controlling the particle diameter easily.

### (Reverse Micellization Method)

The reverse micellization method includes at least the steps of mixing two types of reverse micelle solutions so as to cause a reduction reaction (the reduction step) and performing aging the mixture at a specific temperature after the reduction reaction (the aging step).
Each step will be described below.

### Reduction Step

First, a mixture of a surfactant-containing water-insoluble organic solvent and an aqueous solution of a reducing agent is prepared as a reverse micelle solution (I).

An oil-soluble surfactant may be used as the surfactant. Examples of such a surfactant include sulfonate type surfactants (such as Aerosol OT (trade name, manufactured by Wako Pure Chemical Industries, Ltd.)), quaternary ammonium salt type surfactants (such as cetyltrimethylammonium bromide) and ether type surfactants (such as pentaethylene glycol dodecyl ether).
The content of the surfactant in the water-insoluble organic solvent is preferably from 20 to 200 g/l.

The water-insoluble organic solvent for dissolving the surfactant is preferably an alkane, an ether, alcohol or the like.
The alkane is preferably of 7 to 12 carbon atoms. Examples of such an alkane include heptane, octane, isooctane, nonane, decane, undecane, and dodecane.
The ether is preferably diethyl ether, dipropyl ether, dibutyl ether, or the like.

One or more of alcohols, polyols, H₂, and compounds having HCHO, S₂O₆²⁻, H₂PO₂⁻, BH₄⁻, N₂H₅⁺, H₂PO₃⁻, or the like may be used alone or in combination as the reducing agent in the aqueous solution.
The amount of the reducing agent in the aqueous solution is preferably from 3 to 50 moles per mole of the metal salt.

In this process, the mass ratio of water to the surfactant in the reverse micelle solution (I) (water/surfactant) is preferably 20 or less. If such a mass ratio is 20 or less, advantageously, precipitation can be suppressed, and the particles can easily be uniform. The mass ratio is preferably 15 or less, more preferably from 0.5 to 10. In addition to the reverse micelle solution (I), any other reverse micelle solution (I'), (I") or the like may be prepared with variations in the mass ratio or the material for use, and may be used in combination.

Another mixture of a surfactant-containing water-insoluble organic solvent and an aqueous solution of a metal salt is independently prepared as a reverse micelle solution (II).
The conditions of the surfactant and the water-insoluble organic solvent, such as materials for use and concentration may be the same as those of the reverse micelle solution (I).
The type of the reverse micelle solution (II) for use may be the same as or different from that of the reverse micelle solution (I). Similarly, the mass ratio of water to the surfactant in the reverse micelle solution (II) may be the same as or different from that of the micelle solution (I). In addition to the reverse micelle solution (II), any other micelle solution (II'), (II") or the like may be prepared with variations in the mass ratio or the material for use, and may be used in combination.

Examples of the metal salt include H₂PtCl₆, K₂PtCl₄, Pt(CH₃COCHCOCH₃)₂, Na₂PdCl₄, Pd(OCOCH₃)₂, PdCl₂, Pd(CH₃COCHCOCH₃)₂, HAuCl₄, Fe₂(SO₄)₃, Fe(NO₃)₃, (NH₄)₃Fe(C₂O₄)₃, Fe(CH₃COCHCOCH₃)₃, NiSO₄, CoCl₂, Co(OCOCH₃)₂, AgNO₃, AgCH₃COO, AgClO₄, and (NH₄)₂CuCl₄.

The concentration of the aqueous metal salt solution is preferably from 0.1 to 1000 µmol/ml, more preferably from 1 to 100 µmol/ml (in terms of the content of the metal salt).

The reverse micelle solutions (I) and (II) prepared above are mixed. Any mixing method may be used. For example, the reverse micelle solution (II) may be added to the reverse micelle solution (I) while stirring the reverse micelle solution (I), in consideration of uniformity in reduction. After the mixing is completed, a reduction reaction proceeds, and at that time, the temperature is preferably kept constant in the range from -5 to 30°C.
When the reduction temperature is from -5 to 30°C, the problem of unevenness in reduction reaction due to condensation of the aqueous phase can be eliminated, and the problem of easily causing aggregation or precipitation and making the system unstable can also be eliminated. The reduction temperature is preferably from 0 to 25°C, more preferably from 5 to 25°C.
Herein, the "constant temperature" means that when the target temperature is set at T (°C), the temperature of the reduction reaction is in the range of T ± 3°C. Even in such a case, the upper and lower limits are within the above reduction temperature range (from -5 to 30°C).

The time period of the reduction reaction should be appropriately set depending on the amount of the reverse micelle solution and the like, and is preferably from 1 to 30 minutes, more preferably from 5 to 20 minutes.

The reduction reaction has a significant effect on monodispersion of the particle size distribution and thus is preferably performed with high speed stirring.
A stirrer with high shearing force is preferably used. Specifically, such a preferred stirrer comprises: an agitating blade basically having a turbine or type structure; a structure of a sharp blade attached to the end of the agitating blade or placed at the position in contact with the agitating blade; and a motor for rotating the agitating blade. Useful examples thereof include Dissolver (trade name, manufactured by TOKUSHU KIKA KOGYO CO., LTD.), Omni-Mixer (trade name, manufactured by Yamato Scientific Co., Ltd.), and a homogenizer (trade name, manufactured by SMT Company). A stable dispersion of monodisperse alloy particles can be prepared using any of these stirrers.
In the above stirrer, the number of revolutions is preferably from 2000 to 20000 rpm.

After the reaction of the reverse micelle solutions (I) and (II), at least one dispersing agent having one to three amino or carboxyl groups is preferably added in an amount of 0.001 to 10 moles per mole of the alloy particles to be prepared.

If such a dispersing agent is added, more monodisperse aggregation-free alloy particles can be produced. When the addition amount is from 0.001 to 10 moles, the monodispersion of the alloy particles can further be improved while aggregation can be suppressed.

The dispersing agent is preferably an organic compound having a group capable of adsorbing to the alloy particle surface. Examples thereof include those having one to three amino, carboxyl, sulfonic acid, or sulfinic acid groups. One or more of those compounds may be used alone or in combination.
Specific examples of the dispersing agent include the compounds represented by the structural formula: R-NH₂, NH₂-R-NH₂, NH₂-R(NH₂)-NH₂, R-COOH, COOH-R-COOH, COOH-R(COOH)-COOH, R-SO₃H, SO₃H-R-SO₃H, SO₃H-R(SO₃H)-SO₃H, R-SO₂H, SO₂H-R-SO₂H, or SO₂H-R(SO₂H)-SO₂H. In each formula, R is a straight chain, branched or cyclic, saturated or unsaturated hydrocarbon.

A particularly preferred dispersing agent is oleic acid, which is a known surfactant for colloid stabilization and has been used to protect particles of a metal such as iron. The relatively long chain of oleic acid can provide significant steric hindrance so as to cancel the strong magnetic interaction between particles. For example, oleic acid has an 18-carbon atoms chain and a length of about 20 angstroms (2 nm). Oleic acid is not aliphatic but has a double bond.
A similar long-chain carboxylic acid such as erucic acid and linolic acid may also be used as well as oleic acid. One or more of the long-chain organic acids having 8 to 22 carbon atoms may be used alone or in combination. Oleic acid is preferred because it is inexpensive and easily available from natural sources such as olive oil. Oleylamine, a derivative of oleic acid, is also a useful dispersing agent as well as oleic acid.

### (Aging Step)

After the reduction reaction is completed, the resulting solution is heated to an aging temperature.
The aging temperature is preferably a constant temperature of 30 to 90°C. Such a temperature should be higher than the temperature of the reduction reaction. The aging time period is preferably from 5 to 180 minutes. If the aging temperature and the aging time are each in the above range, aggregation or precipitation can be prevented, and a change in composition due to incomplete reaction can be prevented. The aging temperature and the aging time are preferably from 40 to 80°C and from 10 to 150 minutes, respectively, more preferably from 40 to 70°C and from 20 to 120 minutes, respectively.

Herein, the "constant temperature" has the same meaning as in the case of the reduction temperature (provided that the phrase "reduction temperature" is replaced by the phrase "aging temperature"). Particularly in the above range (from 30 to 90°C), the aging temperature is preferably 5°C or more, more preferably 10°C or more higher than the reduction temperature. If the aging temperature is 5°C or more higher than the reduction temperature, the composition as prescribed can be easy to obtain.

After the aging is performed, a washing and dispersing process is preferably performed, which includes the steps of: washing the resulting solution with a mixture solution of water and a primary alcohol; then performing a precipitation treatment with a primary alcohol to produce a precipitate; and dispersing the precipitate in an organic solvent.
Such a washing and dispersing process can remove impurities so that the applicability of the coating for forming the magnetic layer of the magnetic recording medium can further be improved.
The washing step and the dispersing step may each be performed at least once, preferably twice or more.

Any primary alcohol may be used in the washing, and methanol, ethanol or the like is preferred. The mixing ratio (water/primary alcohol) by volume is preferably in the range from 10/1 to 2/1, more preferably from 5/1 to 3/1. If the ratio of water is too high, the surfactant can be resistant to being removed. If the ratio of the primary alcohol is too high, on the other hand, aggregation may occur.

Thus, a dispersion that comprises the alloy particles dispersed in the solution (an alloy particle-containing liquid) is obtained. The alloy particles are monodispersed and thus can be prevented from aggregating and can maintain a uniformly dispersed state even when applied to a support. The respective alloy particles can be prevented from aggregating even when annealed, and thus they can efficiently be ferromagnetized and have good suitability for coating.

4. The magnetic recording medium The magnetic recording medium of the invention has at least one soft magnetic layer and at least one hard magnetic layer on the support. It is preferable to have an intermediate layer between the soft magnetic layer and hard magnetic layer so as to prevent the mutual interference of the magnetism in the both layers.

### 1) The intermediate layer

The intermediate layer formed between the soft magnetic layer and the hard magnetic layer may have soft magnetic nanoparticles. By forming the intermediate layer, when writing is conducted with the magnetic head, the magnetic flux that flows into the soft magnetic layer through the related recording layer (the hard magnetic layer) is strangulated by the soft magnetic nanoparticles in the intermediate layer. Therefore, high magnetic flux density can be maintained by preventing the magnetic flux from spreading in the longitudinal direction in the vicinity of the interface of the recording layer and the intermediate layer. As a result, the writing property can be improved.

### 2) The solvent

The soft magnetic layer, the hard magnetic layer, the intermediate layer, the protective layer, the lubricating layer, and the like that compose the magnetic recording medium in the invention can be manufacture by the applying method or the dipping method using a solvent.

In the invention, a nonpolar solvent is added into the magnetic particle dispersion liquid. Moreover, the dispersion liquid may contain a binder for applying and may partly contain a polar solvent accordingly.

As a non-polar solvent, it is preferable to use at least one of aromatic hydrocarbons such as toluene, benzene, and xylene, and alkanes such as octane, decane, hexane, and nonane. The non-polar solvent is preferable to be contained in a range of from 20% by mass to 95% by mass in the state before preparing the applying liquid, and more preferable to be contained in a range of from 30% by mass to 95% by mass.

As a polar solvent, it is preferable to use at least one of ketones such as acetone, methyl ethyl ketone, and methyl isobutyl ketone; alcohols such as methanol, ethanol, and propanol; esters such as methyl acetate, butyl acetate, and isobutyl acetate; glycol ethers such as glycol dimethyl ether, and glycol monoethyl ether; cyclohexane, and the like.
The polar solvent is preferable to be contained in a range of from 5% by mass to 80% by mass in the state before preparing the applying liquid, and more preferable to be contained in a range of from 5% by mass to 70% by mass.

In terms of satisfying both the solubility of the binder and the prevention of the magnetic particle aggregation, the mass ratio of the polar solvent to the non-polar solvent (polar solvent/non-polar solvent) is preferably from 1/9 to 4/6, more preferably from 1/9 to 3/7.

### 3) Binder

The binder may be a known thermoplastic resin, a known thermosetting resin or a known reactive resin or any combination thereof.
In an embodiment of the invention, the thermoplastic resin has a glass transition temperature of -100 to 150°C, a number average molecular weight of 1,000 to 200,000 (more preferably of 10,000 to 100,000) and a polymerization degree of about 50 to 1000.

Examples of such a thermoplastic resin include polymers or copolymers comprising, as a constituent unit, vinyl chloride, vinyl acetate, vinyl alcohol, maleic acid, acrylic acid, acrylate ester, vinylidene chloride, acrylonitrile, methacrylic acid, methacrylate ester, styrene, butadiene, ethylene, vinyl butyral, vinyl acetal, vinyl ether, or the like; and polyurethane resins and various rubber resins.

Examples of the thermosetting resin and the reactive resin include phenol resins, epoxy resins, curable polyurethane resins, urea resins, melamine resins, alkyd resins, reactive acrylic resins, formaldehyde resins, silicone resins, epoxy-polyamide resins, a mixture of a polyester resin and an isocyanate pre-polymer, a mixture of a polyester polyol and a polyisocyanate, and a mixture of polyurethane and polyisocyanate.
These resins are described in detail in the text "Plastic Handbook," published by Asakura Publishing Company Ltd. Any known electron beam-curable resin may also be used for each layer. Examples of such a resin and a method of producing the same are described in detail in JP-A No. 62-256219.

One or more of the above resins may be used alone or in combination. A preferable example thereof is polyurethane by itself; a combination of a polyurethane resin and at least one resin selected from a vinyl chloride resin, a vinyl chloride-vinyl acetate copolymer, a vinyl chloride-vinyl acetate-vinyl alcohol copolymer, and a vinyl chloride-vinyl acetate-maleic anhydride copolymer; and a combination of any of the above copolymers and polyisocyanate.

The structure of the polyurethane resin may comprise polyester-polyurethane, polyether-polyurethane, polyether-polyester-polyurethane, polycarbonate-polyurethane, polyester-polycarbonate-polyurethane, polycaprolactone-polyurethane, or the like.

In order to have better dispersibility and durability, any of the above binders may preferably have at least one polar group selected from -COOM, -SO₃M, -OSO₃M, -P = O(OM)₂, -O-P = O(OM)₂ (wherein M represents a hydrogen atom or an alkali metal base), OH, NR₂, N⁺R₃ (wherein R represents a hydrocarbon group), an epoxy group, SH, and CN, wherein the polar group is introduced by copolymerization or addition reaction. Among these, -SO₃M is particularly preferred. The amount of such a polar group is preferably from 10⁻⁸ to 10⁻¹ mol/g, more preferably from 10⁻⁶ to 10⁻² mol/g.

Specific examples (by product name) of the binder for use in the invention include VAGH, VYHH, VMCH, VAGF, VAGD, VROH, VYES, VYNC, VMCC, XYHL, XYSG; PKHH, PKHJ, PKHC, and PKFE (each manufactured by Union Carbide Corporation), MPR-TA, MPR-TA5, MPR-TAL, MPR-TSN, MPR-TMF, MPR-TS, MPR-TM, and MPR-TAO (each manufactured by Nisshin Chemical Industry Co., Ltd.), 1000W, DX80, DX81, DX82, DX83, and 100FD (each manufactured by DENKI KAGAKU KOGYO KABUSHIKI KAISHA), MR-104, MR-105, MR110, MR100, MR555, and 400X-110A (each manufactured by ZEON CORPORATION), Nippollan N2301, N2302 and N2304 (each manufactured by NIPPON POLYURETHANE INDUSTRY CO., LTD.), Pandex T-5105, T-R3080 and T-5201, Burnock D-400 and D-210-80 and Crisvon 6109 and 7209 (each manufactured by DAINIPPON INK AND CHEMICALS, INCORPORATED), Vylon UR8200, UR8300, UR8700, RV530, and RV280 (each manufactured by TOYOBO CO., LTD.), Daiferamine 4020, 5020, 5100, 5300, 9020, 9022, and 7020 (each manufactured by Dainichiseika Color & Chemicals Mfg. Co., Ltd.), MX 5004 (trade name, manufactured by MITSUBISHI CHEMICAL CORPORATION), Sanprene SP-150 (trade name, manufactured by SANYO KASEI Co., Ltd.), and Saran F310 and F210 (trade name, manufactured by Asahi Kasei Corporation).

When a magnetic layer is formed together with a non-magnetic layer, the binder may also be contained in the non-magnetic layer. When used in the non-magnetic and magnetic layers, the binder preferably has a content of 2 to 50% by mass, more preferably of 10 to 30% by mass, based on the total mass of the non-magnetic powder in the non-magnetic layer or based on the total mass of the hard magnetic ordered alloy (the magnetic particles) in the magnetic layer. Preferred is 5 to 30% by mass of the vinyl chloride resin, 2 to 20% by mass of the polyurethane resin or 2 to 20% by mass of the polyisocyanate, and any combination thereof is preferably used. In a case where a very small amount of desorbed chlorine can cause head corrosion, for example, only the polyurethane resin or only a combination of the polyurethane resin and the polyisocyanate may be used.

When the polyurethane resin is used, it preferably has a glass transition temperature of -50 to 150°C, more preferably of 0 to 100°C, still more preferably of 30 to 90°C, a breaking elongation of 100 to 2000%, a breaking stress of 0.05 to 10 kg/mm² (0.49 to 98 MPa), and a yield point of 0.05 to 10 kg/mm² (0.49 to 98 MPa).

Examples of the polyisocyanate include isocyanates such as tolylene diisocyanate, 4,4'-diphenylmethane diisocyanate, hexamethylene diisocyanate, xylylene diisocyanate, naphthylene-1,5-diisoyanate, o-toluidine diisocyanate, isophorone diisocyanate, and triphenylmethane triisocyanate; reaction products of any of these isocyanates and a polyalcohol; and polyisocyanates formed by the condensation reaction of isocyanates.
These isocyanates are commercially available under the trade names of Coronate L, Coronate HL, Coronate 2030, Coronate 2031, Millionate MR, and Millionate MTL (trade name, manufactured by NIPPON POLYURETHANE INDUSTRY CO., LTD.), Takenate D-102, Takenate D-110N, Takenate D-200, and Takenate D-202 (trade name, manufactured by TAKEDA CHEMICAL INDUSTRIES, LTD), and Desmodur L, Desmodur IL, Desmodur N, and Desmodur HL (trade name, manufactured by Bayer Chemicals Japan Ltd.). Each layer may use one of these isocyanates or may use a combination of two or more of these isocyanates for the benefit of the difference in curing reactivity.

As a binder when the annealing is performed after the application, an organic or inorganic matrix agent containing a metal and oxygen is preferable. Specific examples include organosilica sol (for example, trade name: Silica Sol, manufactured by Nissan Chemical Industries, Ltd., trade name: Nanotec SiO₂, manufactured by C. I. Kasei Co., Ltd.), organotitania sol (for example, trade name: Nanotec TiO₂, manufactured by C. I. Kasei Co., Ltd.), and silicone resin (for example, trade name: Torephile R910, manufactured by Dow Coming Toray Silicone Co., Ltd.). The amount of a matrix agent added is 1 to 400% by volume to the whole volume of the magnetic nanoparticles, preferable to be 3 to 300% by volume, and more preferable to be 5 to 200% volume.

### 4) Application

As a method for applying the soft magnetic layer, the intermediate layer, the hard magnetic layer, the protective layer, the lubricating layer, or the like in the invention, the following method can be used: spin coating, air doctor coating, blade coating, rod coating, extrusion coating, air-knife coating, squeeze coating, impregnation coating, reverse roll coating, transfer coating, gravure coating, kiss coating, cast coating, or spray coating.

### 5) The support

As the support in the invention, as long as the support is used for the magnetic recording medium, either inorganic substance or organic substance is acceptable. The support of 3 µm to 800 µm in thickness can be used.

Examples of the material for the inorganic support include Al, a Mg alloy such as Al-Mg and Mg-Al-Zn, glass, quartz, carbon, silicon, and ceramics. These supports have good resistance to impact or rigidity suitable for slimming or high speed rotation. The inorganic support is more resistant to heat than the organic support.

Examples of the material for the organic support include polyesters (such as polyethylene terephthalate and polyethylene naphthalate), polyolefins, cellulose triacetate, polycarbonate, aliphatic polyamide, aromatic polyamide, polyimide, polyamideimide, polysulfone, and polybenzoxazole.

If necessary, a laminate type support as disclosed in JP-A No. 03-224127 may be used for the purpose of changing the surface roughness of the support surface to be coated. Any of these supports may be subjected to corona discharge treatment, plasma treatment, adhesion-facilitating treatment, heat treatment, dust-removing treatment, or the like, in advance.

The center plane average surface roughness (Ra) of the support measured with TOPO-3D manufactured by WYKO Corporation is generally preferably 8.0 nm or less, more preferably 4.0 nm or less, still more preferably 2.0 nm or less. It is preferred that the support may not only have a low center plane average surface roughness but also be free from a coarse projection of 0.5 µm or higher.

The shape of the surface roughness may be freely controlled by the size and amount of a filler which is added to the support as needed. Examples of such a filler include fine particles of an inorganic material such as an oxide or carbonate of Ca, Si, Ti, or the like, and a fine organic powder of acrylic resin or the like. Preferably, the support is 1 µm or less in maximum height of irregularities (Rmax), 0.5 µm or less in ten point height of irregularities (Rz), 0.5 µm or less in center plane top height (Rp), 0.5 µm or less in center plane valley depth (Rv), from 10% to 90% in center plane area rate (Sr), and from 5 to 300 µm in average wavelength (λa). In order to provide the desired electromagnetic transfer characteristic and durability, the distribution of the surface projections of the support may be freely controlled using the filler, which may be controlled in the range from 0.01 µm to 1 µm in size and in the range from 0 to 2000 per 0.1 mm² in the number of particles.

The F-5 value of the support is preferably from 5 to 50 kg/mm² (49 to 490 MPa). The support preferably shows a thermal contraction rate of 3% or less, more preferably of 1.5% or less when heated at 100°C for 30 minutes, and preferably shows a thermal contraction rate of 1% or less, more preferably of 0.5% or less when heated at 80°C for 30 minutes. Preferably, the support has a breaking strength of 5 to 100 kg/mm² (49 to 980 MPa), an elastic modulus of 100 to 2000 kg/mm² (0.98 to 19.6 GPa), a thermal expansion coefficient of 10⁻⁸ to 10⁻⁴/°C, more preferably of 10⁻⁶ to 10⁻⁵/°C, and a humidity expansion coefficient of 10⁻⁴/RH% or less, more preferably 10⁻⁵/RH% or less. In an embodiment of the invention, the thermal characteristics, the size characteristics, or the mechanical strength characteristics are substantially equal in all in-plane directions within a difference of 10%.

### 6) Soft magnetic layer, Hard magnetic layer

In the soft magnetic layer and the hard magnetic layer, various kinds of additives and the like are contained as need, besides already described magnetic particles, a binder, a polar solvent, and a nonpolar solvent.
The recording medium of the invention may be prepared with the above-mentioned magnetic layer only on one side or on the both sides. Moreover, a non-magnetic layer may be provided between the support and the magnetic layer in terms of making it as the supply source of a lubricant and of covering the projection in the support.
When the non-magnetic layer is formed on the support, the magnetic layer (called the upper layer or the upper magnetic layer) may be formed on the non-magnetic layer under a wet condition (W/W) after forming the non-magnetic layer by applying, or may be formed after the non-magnetic layer has been dried (W/D).
Though the simultaneous or one by one wet application is preferable in terms of the production yield, in case of a disk, it is sufficiently possible to be used by the application after drying.

The thickness of the soft magnetic layer is preferable to be 20 nm to 300 nm, and more preferable to be 50 nm to 200 nm. Making the thickness 20 nm to 300 nm may prevent the decrease in the record regeneration output and the deterioration of the overwriting property and the resolving power.
The thickness of the hard magnetic layer is preferable to be 5 nm to 100 nm, and more preferable to be 5 nm to 50 nm. When the thickness is 5 nm to 100 nm, regeneration of the record can be performed stably and high density perpendicular magnetic recording can be obtained.

### 7) Perpendicular magnetization treatment

A process of forming the perpendicular magnetic recording layer by conducting the perpendicular magnetization treatment in the invention includes a method in which after magnetic nanoparticles are made to be hard magnetic, a coating liquid redispersed is applied on the support and dried in a magnetic field, a method in which after a coating liquid of magnetic nanoparticles is applied on the support and dried in a magnetic field, annealing is conducted at 350°C to 550°C in a magnetic field, and a method in which after a coating liquid of magnetic nanoparticles is applied on the support and dried in a magnetic field, annealing with a laser beam is conducted in a magnetic field. The magnetic field is applied to the support so as to be in the perpendicular direction to it.

In the above perpendicular magnetization treatment process, a regularized heating treatment in which a template having vacancies is used, and the vacancies are filled with nanoparticles and then heated may be used. Because the regularized heating treatment is conducted in the state of nanoparticles being accumulated in the vacancies and a binding between nanoparticles is so weak to be broken easily, hard magnetic nanoparticles in which the crystallization is regularized can be extracted easily.

Carbon Black and Abrasive Material
The soft magnetic layer and the hard magnetic layer may contain carbon black. Examples of the carbon black for use include furnace black for rubber, thermal black for rubber, black for coloring, and acetylene black.
The carbon black preferably has a SBET of 5 to 500 m²/g, a DBP oil absorption of 10 to 400 ml/100 g, an average particle diameter of 2 to 100 nm, more preferably of 5 to 50 nm, a pH of 2 to 10, a water content of 0.1 to 10%, and a tap density of 0.1 to 1.0 g/ml.

Specific examples of the carbon black include BLACKPEARLS-2000, 1300, 1000, 900, 905, 800, and 700, and VULCAN XC-72 (each manufactured by Cabot Corporation), #80, #60, #55, #50, and #35 (each manufactured by Asahi Carbon Co., Ltd.), #2400B, #2300, #900, #1000, #30, #40, and #10B (each manufactured by Mitsubishi Chemical Co., Ltd.), and CONDUCTEX SC, RAVEN 150, 50, 40, and 15, and RAVEN-MT-P (each manufactured by Columbian Chemicals Company), and Ketjenblack EC (trade name, manufactured by Japan EC Company).

The carbon black may be subjected to a surface treatment with a dispersing agent or the like or subjected to grafting with a resin before use. The surface of the carbon black may also partially be converted into graphite. Before added to a magnetic coating, the carbon black may be dispersed with a binder in advance.
One or more of these carbon blacks may be used alone or in combination. The carbon black is preferably used in an amount of 0.1 to 30% based on the total mass of the magnetic material (magnetic particles). The carbon black has the function of preventing static electrification of the magnetic layer, reducing the coefficient of friction, imparting light-shielding properties, and improving the film strength, depending on the type of the carbon black. Therefore, the carbon black in the invention may properly be used depending on purpose in view of the above-described characteristics such as the particle size, the oil absorption, the electrical conductivity, and pH with a variation of the type, amount, or combination of the carbon black(s) at the upper magnetic layer and the lower non-magnetic layer. The carbon black should rather be optimized in each layer. For example, the text "Carbon Black Handbook" (edited by the Carbon Black Association of Japan) may be referred to, regarding the carbon black for use in the magnetic layer according to the invention.

The magnetic layer may also contain an abrasive material. The abrasive material may be mainly any one or any combination of known materials with a Mohs' hardness of 6 or more, such as α-alumina, β-alumina, silicon carbide, chromium oxide, cerium oxide, α-iron oxide, corundum, artificial diamond, silicon nitride, silicon carbide, titanium carbide, titanium oxide, silicon dioxide, and boron nitride. Any complex of these abrasive materials (in which one abrasive is surface-treated with another abrasive) may also be used. In some cases, the abrasive material contains any other compound or element besides the main component. If the content of the main component is 90% by mass or more in such cases, however, the effect should be the same.

The particle size of the abrasive material is preferably from 0.01 to 2 µm, more preferably 0.05 to 1.0 µm, still more preferably from 0.05 to 0.5 µm.
The particle size distribution should preferably be narrow for improvement in electromagnetic transfer characteristics. For the purpose of improving the durability, abrasive materials different in particle size may be used in combination as needed, or a single abrasive material having a wide particle size distribution may be used for the same effect. Preferably, the abrasive material has a tap density of 0.3 to 2 g/ml, a water content of 0.1 to 5%, a pH of 2 to 11, and a SBET of 1 to 30 m²/g. The shape of the abrasive material may be any of a needle, a sphere and a cube, and preferably has a sharp edge part for high abrasive properties.

Specific examples of the abrasive material include AKP-12, AKP-15, AKP-20, AKP-30, AKP-50, HIT20, HIT-30, HIT-55, HIT60A, HIT70, HIT80, and HIT100 (each manufactured by Sumitomo Chemical Co., Ltd.), ERC-DBM, HP-DBM and HPS-DBM (each manufactured by Reynolds Corporation), WA10000 (trade name, manufactured by Fujimi Kenmazai Corporation), UB20 (trade name, manufactured by Uyemura & Co., Ltd.), G-5, Kromex U2 and Kromex U1 (each manufactured by Nippon Chemical Industrial Co., Ltd.), TF100 and TF140 (each manufactured by TODA KOGYO CORP.), beta-Random Ultrafine (trade name, manufactured by IBIDEN CO., LTD.), and B-3 (trade name, manufactured by Showa Mining Co., Ltd.). If desired, any of these abrasive materials may be added to the non-magnetic layer, so that the shape of the surface or the state of the abrasive material projection can be controlled. Of course, the particle diameter and amount of the abrasive material to be added to the magnetic layer or the non-magnetic layer should each be set to an optimal value.

### Additives

The magnetic layer and a non-magnetic layer as described below may contain any of various additives. The additive to be used may have at least one effect of a lubricating effect, an antistatic effect, a dispersing effect, and a plastic effect.

Examples of the additives include molybdenum disulfide, tungsten disulfide, graphite, boron nitride, graphite fluoride, a silicone oil, a polar group-containing silicone, a fatty acid-modified silicone, a fluorine-containing silicone, a fluorine-containing alcohol, a fluorine-containing ester, a polyolefin, a polyglycol, an alkyl phosphate and an alkali metal salt thereof, an alkyl sulfate and an alkali metal salt thereof, polyphenyl ether, phenyl phosphonic acid, α-naphthyl phosphoric acid, phenyl phosphoric acid, diphenyl phosphoric acid, p-ethylbenzene phosphonic acid, phenyl phosphinic acid, aminoquinones, various silane coupling agents, titanium coupling agents, a fluorine-containing alkyl sulfate and an alkali metal salt thereof, a monobasic fatty acid having10 to 24 carbon atoms (which may have an unsaturated bond or may be branched) and a metal salt thereof (with Li, Na, K, Cu, or the like), a mono-, di-, tri-, tetra-, penta-, or hexa-hydric alcohol having 12 to 22 carbon atoms (which may have an unsaturated bond or may be branched), an alkoxy alcohol having 12 to 22 carbon atoms, a mono-, di- or tri-fatty acid ester comprising a monobasic fatty acid having 10 to 24 carbon atoms (which may have an unsaturated bond or may be branched) and any one of mono-, di-, tri-, tetra-, penta-, and hexa-hydric alcohols having 2 to 12 carbon atoms (which may have an unsaturated bond or may be branched), a fatty acid ester of a monoalkyl ether of an alkylene oxide polymer, a fatty acid amide having 8 to 22 carbon atoms, and an aliphatic amine having 8 to 22 carbon atoms.

Specific examples of the fatty acid include capric acid, caprylic acid, lauric acid, myristic acid, palmitic acid, stearic acid, behenic acid, oleic acid, elaidic acid, linolic acid, linolenic acid, and isostearic acid. Specific examples of the ester include butyl stearate, octyl stearate, amyl stearate, isooctyl stearate, butyl myristate, octyl myristate, butoxyethyl stearate, butoxydiethyl stearate, 2-ethylhexyl stearate, 2-octyldodecyl palmitate, 2-hexyldodecyl palmitate, isohexadecyl stearate, oleyl oleate, dodecyl stearate, tridecyl stearate, oleyl erucate, neopentyl glycol didecanoate, and ethylene glycol dioleyl. Specific examples of the alcohol include oleyl alcohol, stearyl alcohol and lauryl alcohol.

Examples of the applicable additive also include a nonionic surfactant such as an alkylene oxide type, a glycerol type, a glycidol type, and an alkylphenol-ethylene oxide adduct; a cationic surfactant such as a cyclic amine, an ester amide, a quaternary ammonium salt, a hydantoin derivative, a heterocyclic compound, a phosphonium compound, or a sulfonium compound; an anionic surfactant having an acidic group such as a carboxylic acid, a sulfonic acid, a phosphoric acid, a sulfate ester group, and a phosphate ester group; and an amphoteric surfactant such as an amino acid, an aminosulfonic acid, a sulfate or phosphate ester of an amino alcohol, and an alkyl betaine type.
Such surfactants are described in detail in the text "Surfactant Handbook" (published by Sangyo Tosho Publishing). The lubricant, the antistatic agent or the like does not have to be 100% pure and may contain impurities such as an isomer, an unreacted material, a byproduct, a decomposed product, and an oxide, besides the main component. The content of such impurities is preferably 30% by mass or less, more preferably 10% by mass or less.

These lubricants and surfactants have different physical actions, respectively, and the type and amount of the lubricant or the surfactant and the mixing ratio of the lubricant and the surfactant for producing a synergistic effect should be optimized depending on a purpose. Examples of such a purpose include, but of course are not limited thereto, (1) control of exudation to the surface by using fatty acids having different melting point in the non-magnetic and magnetic layers, (2) control of exudation to the surface by using esters different in boiling point, melting point or polarity, (3) improvement in application stability by controlling the amount of the surfactant, and (4) improvement in the lubricating effect by increasing the amount of the lubricant added to an intermediate layer. In general, the total amount of the lubricant is preferably from 0.1 to 50% by mass, more preferably from 2 to 25% by mass, based on the total amount of the magnetic material (magnetic particles) or the non-magnetic powder.

In the invention, the whole or part of the additive(s) may be added in any step of the magnetic coating-manufacturing process and the non-magnetic coating-manufacturing process. For example, the additive(s) may be mixed with the magnetic material before the kneading step, may be added in the step of kneading the magnetic material, the binder and the solvent, may be added in the dispersing step, may be added after the dispersing step, or may be added immediately before the application.

In some cases, after the magnetic layer is applied depending on the purpose, the whole or part of the additive(s) may be applied simultaneously or sequentially so that the purpose can be achieved. Depending on the purpose, a calender treatment or slitting may be performed, and then the lubricant may be applied to the surface of the magnetic layer.

### Non-Magnetic Layer

A detailed description is then provided of the non-magnetic layer. The non-magnetic layer may have any structure, as long as it is substantially non-magnetic. In general, it comprises at least a resin, in which a power such as an inorganic or organic power is preferably dispersed. The inorganic power is preferably non-magnetic but may be magnetic as long as the formed layer is substantially non-magnetic.

The particle size (particle diameter) of the non-magnetic powder is preferably in the range from 0.005 to 2 µm. If desired, non-magnetic powers different in particle size may be used in combination, or even a single non-magnetic powder with a wide particle size distribution may be used to produce the same effect. In particular, the particle size of the non-magnetic powder is preferably in the range from 0.01 µm to 0.2 µm. Specifically, when the non-magnetic powder is granular metal oxide, its average particle diameter is preferably 0.08 µm or less. In the case of a non-magnetic needle-shaped metal oxide powder, its major axis length is preferably 0.3 µm or less, more preferably 0.2 µm or less. Preferably, the non-magnetic powder has a tap density of 0.05 to 2 g/ml, more preferably of 0.2 to 1.5 g/ml, a water content of 0.1 to 5% by mass, more preferably of 0.2 to 3% by mass, still more preferably of 0.3 to 1.5% by mass, and a pH of 2 to 11, particularly preferably of 5.5 to 10.

The SBET (specific surface area) of the non-magnetic powder is preferably from 1 to 100 m²/g, more preferably from 5 to 80 m²/g, still more preferably from 10 to 70 m²/g. The crystallite size (diameter) of the non-magnetic powder is preferably from 0.004 µm to 1 µm, more preferably from 0.04 µm to 0.1 µm. Its oil absorption determined with DBP (dibutyl phthalate) is preferably from 5 to 100 ml/100 g, more preferably from 10 to 80 ml/100 g, still more preferably from 20 to 60 ml/100g. The specific gravity of the non-magnetic powder is preferably from 1 to 12, more preferably from 3 to 6. Its shape may be any one of acicular, spherical, polyhedral, and tabular shapes. Its Mohs' hardness is preferably from 4 to 10.
The SA (stearic acid) absorption of the non-magnetic powder is preferably from 1 to 20 µmol/m², more preferably from 2 to 15 µmol/m², still more preferably from 3 to 8 µmol/m². Its pH is preferably between 3 and 6.

For example, the non-magnetic powder may be selected from inorganic compounds such as metal oxides, metal carbonates, metal sulfates, metal nitrides, metal carbides, and metal sulfides. Examples of such inorganic compounds include α-alumina with an α-component proportion of 90% or more, β-alumina, γ-alumina, θ-alumina, silicon carbide, chromium oxide, cerium oxide, α-iron oxide, hematite, goethite, corundum, silicon nitride, titanium carbide, titanium oxide, silicon dioxide, tin oxide, magnesium oxide, tungsten oxide, zirconium oxide, boron nitride, zinc oxide, calcium carbonate, calcium sulfate, barium sulfate, and molybdenum disulfide, and one or more of these inorganic compounds may be used alone or in combination. In terms of narrow particle-size distribution, multifunction or the like, titanium dioxide, zinc oxide, iron oxide or barium sulfate is particularly preferred, and titanium dioxide or α-iron oxide is most preferred.

Specific examples (by product name) of the non-magnetic powder include Nanotite (trade name, manufactured by SHOWA DENKO K.K.), HIT-100 and ZA-G1 (each manufactured by Sumitomo Chemical Co., Ltd.), α-hematite DPN-250, DPN-250BX, DPN-245, DPN-270BX, DPN-500BX, DBN-SA1, and DBN-SA3 (each manufactured by TODA KOGYO CORP.), titanium oxide TTO-51B, TTO-55A, TTO-55B, TTO-55C, TTO-55S, TTO-55D, SN-100, α-hematite E270, E271, E300, and E303 (each manufactured by ISHIHARA SANGYO KAISHALTD.), titanium oxide STT-4D, STT-30D, STT-30, and STT-65C, and α-hematite α-40 (each manufactured by TITAN KOGYO KABUSHIKI KAISHA), MT-100S, MT-100T, MT-150W, MT-500B, MT-600B, MT-100R and MT-500HD (each manufactured by Tayca Corporation), FINEX-25, BF-1, BF-10, BF-20, and ST-M (each manufactured by SAKAI CHEMICAL INDUSTRY CO., LTD.), DEFIC-Y and DEFIC-R (each manufactured by Dowa Mining Co., Ltd.), AS2BM and Ti02P25 (each manufactured by Nippon Aerosil Co., Ltd.), and 100A and 500A (each manufactured by UBE INDUSTRIES, LTD.). Particularly preferred are a non-magnetic titanium dioxide powder and a non-magnetic α-iron oxide powder.

The surface of the non-magnetic powder is preferably surface-treated so as to have any one of Al₂O₃, SiO₂, TiO₂, ZrO₂, SnO₂, Sb₂O₃, ZnO, and Y₂O₃. In view of dispersibility, Al₂O₃, SiO₂, TiO₂, or ZrO₂ is preferred, and Al₂O₃, SiO₂ or ZrO₂ is more preferred. One or more of these materials may be used alone or in combination. Depending on purpose, a co-precipitated surface treatment layer may also be used, or a method in which after allowing alumina to exist and then treating the surface layer with silica or vice versa may be used. Depending on purpose, the surface treatment layer may be porous but is generally preferably homogeneous and dense.

If the non-magnetic layer contains carbon black and thus has a reduced surface electric resistance Rs, the light transmission factor can be made smaller, and the desired micro-Vickers hardness can also be obtained. The carbon black-containing non-magnetic layer can also have a lubricant-storing effect.

Any organic power may also be added to the non-magnetic layer, depending on purpose. Examples thereof include acrylic styrene resin powder, benzoguanamine resin powder, melamine resin power, and phthalocyanine pigments. Polyolefin resin powder, polyester resin powder, polyamide resin powder, polyimide resin powder, or polyethylene fluoride resin may also be used. Such a powder may be prepared using the method disclosed in JP-A No. 62-18564 or 60-255827.

The non-magnetic layer preferably has a thickness of 0.2 µm to 3.0 µm, still more preferably of 0.3 µm to 2.0 µm.

The binder resin, the lubricant, the dispersing agent, the additives, the solvent, the dispersing method, or the like for the magnetic layer may also be used for the non-magnetic layer. In particular, any known technique for the magnetic layer may be applied to the amount and type of the binder resin or the addition amount and type of the additives or the dispersing agent.

### 11) Back Layer

In contrast to video tapes or audio tapes, magnetic tapes for use in computer data recording are generally strongly required to be suited for repeated running. In order to keep such high running durability, the back layer may contain carbon black and an inorganic powder.

Two types of carbon blacks different in average particle diameter are preferably used in combination. In such a case, a preferred combination comprises fine carbon black particles with an average particle diameter of 10 to 20 nm and coarse carbon black particles with an average particle diameter of 230 to 300 nm.

When such fine carbon black particles are added, the back layer can have a low surface electric resistance and a low light transmittance. Some magnetic recording apparatuses often use the light transmittance of the tape for operational signals. In such cases, the addition of the fine carbon black particles is particularly effective. In general, the fine carbon black particles also have a high liquid-lubricant-holding power and can contribute to a reduction in coefficient of friction when used in combination with a lubricant.

On the other hand, the coarse carbon black particles with a volume average particle diameter of 230 to 300 nm have the function of serving as a solid lubricant. They can also form very small projections at the surface of the back layer to reduce the contact area and to contribute to a reduction in coefficient of friction. When the coarse carbon black particles are used alone, however, they can easily be dropped off from the back layer by tape sliding in a severe running system, so that the error rate can disadvantageously increase.

Specific examples of commercial products of the fine carbon black particles include the following, with each average particle diameter indicated inside the parentheses: RAVEN 2000B (18 nm) and RAVEN 1500B (17nm) (each manufactured by Columbian Chemicals Company), BP 800 (17 nm) (trade name, manufactured by Cabot Corporation), PRINTEX 90 (14 nm), PRINTEX 95 (15 nm), PRINTEX 85 (16 nm), and PRINTEX 75 (17 nm) (each manufactured by Degussa AG), and #3950 (16 nm) (trade name, manufactured by Mitsubishi Chemical Industries Ltd.).
Specific examples of commercial products of the coarse carbon black particles include Thermal Black (270 nm) (trade name, manufactured by Cancarb Ltd.) and RAVEN MTP (275 nm) (trade name, manufactured by Columbian Chemicals Company).

When the two types of particles different in average particle diameter are used in the back layer, the content ratio (mass ratio) of the fine carbon black particles with a volume average particle diameter of 10 to 20 nm to the coarse carbon black particles with a volume average particle diameter of 230 to 300 nm is preferably in the range from 75:25 to 98:2, more preferably in the range from 85:15 to 95:5.

The amount of the carbon black (or the total amount of the two types of carbon blacks) in the back layer is generally from 30 to 80 parts by mass, preferably from 45 to 65 parts by mass, based on 100 parts by mass of the binder.

The inorganic powder may use with carbon black.
Two types of inorganic powders different in hardness are preferably used in combination. For example, it is preferred to use a soft inorganic powder with a Mohs' hardness of 3 to 4.5 and a hard inorganic powder with a Mohs' hardness of 5 to 9. When such a soft inorganic powder with a Mohs' hardness of 3 to 4.5 is added, the coefficient of friction can be stabilized against repeated running. In such a hardness range, a slide guide pole can also be prevented from being abraded. Such an inorganic powder preferably has an average particle diameter of 30 to 50 nm.

Examples of the soft inorganic powder with a Mohs' hardness of 3 to 4.5 include calcium sulfate, calcium carbonate, calcium silicate, barium sulfate, magnesium carbonate, zinc carbonate, and zinc oxide. One or more of these materials may be used alone or in combination.

The amount of the soft inorganic powder in the back layer is preferably in the range from 10 to 140 parts by mass, more preferably from 35 to 100 parts by mass, based on 100 parts by mass of the carbon black.

When the hard inorganic powder with a Mohs' hardness of 5 to 9 is added, the strength of the back layer can be increased so that the running durability can be improved. When such an inorganic powder is used in combination with the carbon black and the soft inorganic powder, a strong back layer can be formed, which can be less degraded by repeated sliding. When such an inorganic powder is added, a moderately abrasive power can be provided so that the adhesion of shavings to a tape guide pole or the like can be reduced. Particularly when it is used in combination with the soft inorganic powder, the sliding characteristics can be improved with respect to a coarse surface guide pole, and the coefficient of friction of the back layer can also be stabilized.

The hard inorganic powder preferably has an average particle size in the range from 80 to 250 nm (more preferably from 100 to 210 nm).

Examples of the hard inorganic powder with a Mohs' hardness of 5 to 9 include α-iron oxide, α-alumina and chromium oxide (Cr₂O₃). One or more of these powdered materials may be used alone or in combination. In particular, α-iron oxide or α-alumina is preferred. The amount of the hard inorganic powder is generally from 3 to 30 parts by mass, preferably from 3 to 20 parts by mass, based on 100 parts by mass of the carbon black.

When the soft and hard inorganic powders are used in combination in the back layer, it is preferably select the soft and hard inorganic powders so as to have a difference of 2 or more (more preferably of 2.5 or more, particularly preferably of 3 or more) in hardness.

The back layer preferably contains: the two types of the inorganic powders which are different in Mohs' hardness and each have a specific average particle size; and the two types of the carbon blacks different in average particle size.

The back layer may also contain a lubricant. Such a lubricant may be properly selected from the lubricants as shown above for the non-magnetic layer or the magnetic layer. Based on 100 parts by mass of the binder, 1 to 5 parts by mass of the lubricant is generally added to the back layer.

### 12) Protective Film and the Like

A very thin protective film may be formed on the magnetic layer to improve the abrasion resistance. A lubricant may also be applied onto the protective film to increase the sliding properties so that the resulting magnetic recording medium can have sufficient reliability.

Examples of the material for the protective film include oxides such as silica, alumina, titania, zirconia, cobalt oxide, and nickel oxide; nitrides such as titanium nitride, silicon nitride and boron nitride; carbides such as silicon carbide, chromium carbide and boron carbide; and carbon such as graphite and amorphous carbon. Particularly preferred is hard amorphous carbon generally called diamond-like carbon.

A protective carbon film made of carbon can have sufficient resistance to abrasion even when very thin, so that it can hardly cause heat sticking to a slide member. Thus, the carbon is preferred material for the protective film.
The protective carbon film is generally formed by a sputtering method in the case of a hard disk. A number of methods using a high deposition rate plasma CVD technique are proposed for a product which has to be formed through a continuous film formation, such as a video tape. Thus, any of these methods is preferably used.
Particularly, it is reported that a plasma injection CVD (PI-CVD) method can form a film at very high speed and can produce a hard protective carbon film with less pinholes and with good quality (for example, see JP-A Nos. 61-130487, 63-279426 and 03-113824).

The protective carbon film preferably has a Vickers hardness of not more than 1000 kg/mm², more preferably of not more than 2000 kg/mm². Preferably, it has an amorphous structure and is non-conductive.
When a diamond-like carbon film is used as the protective carbon film, its structure can be determined by Raman spectroscopic analysis. Specifically, when the diamond-like carbon film is measured, it can be confirmed by the detection of a peak at a wave number of 1520 to 1560 cm⁻¹. As the structure of the carbon film deviates from the diamond-like structure, the peak detected by the Raman spectroscopic analysis deviates from the above range, and the hardness of the protective film also decreases.

Preferred carbon materials for use in forming the protective carbon film include carbon-containing compounds such as alkanes such as methane, ethane, propane, and butane; alkenes such as ethylene and propylene; and alkynes such as acetylene. If desired, a carrier gas such as argon or an additive gas for improving the film quality, such as hydrogen and nitrogen may be added.

If the protective carbon film is too thick, the electromagnetic transfer characteristics may be degraded, or its adhesion to the magnetic layer may be reduced. If the film is too thin, its abrasion resistance may be insufficient. Thus, the film preferably has a thickness of 2.5 to 20 nm, more preferably of 5 to 10 nm.
In order to improve the adhesion between the protective film and the substrate side magnetic layer, it is preferred that the surface of the magnetic layer is etched with an inert gas or modified by exposure to a reactive gas plasma such as oxygen plasma.

In order to improve the running durability and the corrosion resistance, it is preferred that a lubricant or an anti-corrosive agent is applied onto the magnetic layer or the protective film. The lubricant to be added may be a known hydrocarbon lubricant, a known fluorine lubricant, a known extreme-pressure additive, or the like.

Examples of the hydrocarbon lubricant include carboxylic acids such as stearic acid and oleic acid; esters such as butyl stearate; sulfonic acids such as octadecyl sulfonic acid; phosphates such as monooctadecyl phosphate; alcohols such as stearyl alcohol and oleyl alcohol; carboxylic acid amides such as stearic amide; and amines such as stearylamine.

Examples of the fluorine lubricant include modifications of the hydrocarbon lubricants in which part or the whole of the alkyl group is replaced with a fluoroalkyl group or a perfluoropolyether group.
The perfluoropolyether group may be a perfluoromethylene oxide polymer, a perfluoroethylene oxide polymer, a perfluoro-n-propylene oxide polymer (CF₂CF₂CF₂O)ₙ, a perfluoroisopropylene oxide polymer (CF(CF₃)CF_{2O})ₙ, or any copolymer thereof.

The hydrocarbon lubricant may have a polar functional group such as a hydroxyl group, an ester group and a carboxyl group at the end of the alkyl group or in its molecule. Such a compound is preferred because it can be highly effective in reducing the frictional force.
Its molecular weight may be from 500 to 5000, preferably from 1000 to 3000. If the molecular weight is from 500 to 5000, the volatilization can be suppressed, and a reduction in lubricity can also be suppressed. In addition, viscosity rise can be prevented, and accidental stop of running or head crushing can also be prevented, which would otherwise be caused when a disk tends to adhere to a slider.
For example, such a perfluoropolyether is commercially available under the trade name of FOMBLIN (trade name, manufactured by Ausimont) or KRYTOX (trade name, manufactured by DuPont).

Examples of the extreme-pressure additive include phosphates such as trilauryl phosphate, phosphites such as trilauryl phosphite, thiophosphates and thiophosphites such as trilauryl trithiophosphite, and a sulfur extreme-pressure agent such as dibenzyl disulfide.

One or more of these lubricants may be used alone or in combination. Any of these lubricants may be applied to the magnetic layer or the protective layer by applying a solution of the lubricant in an organic solvent by a wire-bar method, a gravure method, a spin coating method, a dip coating method, or the like, or by depositing the lubricant by a vacuum vapor deposition method.

Examples of the anti-corrosive agent include nitrogen-containing heterocyclic compounds such as benzotriazole, benzimidazole, purine, and pyrimidine, and derivatives thereof in which an alkyl side chain is introduced to the main ring; and nitrogen and sulfur-containing heterocyclic compounds such as benzothiazole, 2-mercaptobenzothiazole, tetrazaindene cyclic compounds, and thiouracil compounds, and derivatives thereof.

### 13) Physical Characteristics

The magnetic recording medium of the invention preferably has the physical characteristics as described below.
In the magnetic recording medium of the invention, the magnetic layer preferably has a saturation magnetic flux density of 0.1 to 0.3 T and a coercivity (Hc) of 95.5 kA/m (1200 Oe) to 955 kA/m (12000 Oe), more preferably of 159 to 478 kA/m (2000 to 6000 Oe). The distribution of the coercivity is preferably as narrow as possible. Its rectangular ratio is preferably 0.7 or more.

The center plane average surface roughness Ra of the magnetic layer is 4.0 nm or less, preferably 2 nm or less, more preferably 1 nm or less, with respect to a 250 µm x 250 µm area measured with TOPO-3D manufactured by WYKO Corporation. The surface projections of the magnetic layer are preferably provided as described above so that the electromagnetic transfer properties and the friction coefficient can be optimized. The projections can easily be controlled by filler control of the surface characteristics of the support, by the size and quantity of the powder added to the magnetic layer as described above, or by the shape of the surface of a calender roll. The curl is preferably within ±3 mm.

The magnetic recording medium produced as described above preferably has a center line average surface roughness of 0.1 to 4 nm, more preferably of 0.1 to 2 nm, with respect to a cutoff value of 0.25 mm. The surface with such very good flatness is preferred for a high-density magnetic recording medium.
The method of forming such a surface may include the step of performing a calender treatment after the formation of the magnetic layer. Alternatively, a varnish treatment may be performed.

The resulting magnetic recording medium may appropriately be punched by means of a punching machine or cut into the desired size using a cutting machine.

### 4. Use of the Invention

The ferromagetic ordered alloy nanoparticles of the invention may be used in the recording medium of magnetic tapes such as video tape, computer tape, and the like, and magnetic discs such as flexible disc, hard disc, and the like.
Hereinafter, the present invention will be described with reference to examples but is not limited thereto.

### EXAMPLES

Hereinafter, the features of the invention will be described more specifically with reference to examples. The materials, the amounts used, the composition ratios, the synthetic methods, the manufacturing methods of the mediums, and the like described in the following examples can be suitably changed as long as they do not deviate from the purport of the invention. Therefore, the scope of the invention should not be interpreted definitely by the following specific examples.

### (Synthesis of nanoparticles)

First, the specific example of the synthetic method of nanoparticles will be shown.

### <<Synthesis 1 of nanoparticles>>

The following operations were carried out in the high purity N₂ gas.
To an aqueous metal salt solution in which 0.43 g of ethanedioic acid ammonium iron (III) salt (Fe(NH₄)₃(C₂O₄)₃) (manufactured by Wako Pure Chemical Industries, Ltd.) and 0.42 g of potassium platinichloride (K₂PtCl₄) (manufactured by Wako Pure Chemical Industries, Ltd.) had been dissolved in 6 mL of H₂O (deoxidation had been treated),a solution of 12.4 g of Aerosol OT (trade name, manufactured by Tokyo Chemical Industry Co., Ltd.) in 120 mL of decane (manufactured by Wako Pure Chemical Industries, Ltd.) was added and mixed to prepare a reverse micelle solution (I-A).

To an aqueous reducing agent solution in which 0.48 g of NaBH₄ (manufactured by Wako Pure Chemical Industries, Ltd.) had been dissolved in 6 mL of H₂O (deoxidation had been treated), a solution of 12.4 g of Aerosol OT in 120 mL of decane was added and mixed to prepare a reverse micelle solution (II-A).

To an aqueous reducing agent solution in which 0.12 g of NaBH₄ had been dissolved in 1.5 mL of H₂O (deoxidation had been treated), a solution of 3.1 g of Aerosol OT in 30 mL of decane was added and mixed to prepare a reverse micelle solution (III-A).

To an aqueous reducing agent solution in which 0.01 g of Bicine (trade name, manufactured by DOJINDO LABORATORIES) had been dissolved in 1.5 mL of H₂O (deoxidation had been treated), a solution of 3.1 g of Aerosol OT in 30 mL of decane was added and mixed to prepare a reverse micelle solution (IV).

While the reverse micelle solution (II-A) was stirring at high speed with an Omni mixer (trade name, manufactured by Yamato Scientific Co., Ltd.), to which the reverse micelle solution (I-A) was instantaneously added. The reverse micelle solution (III-A) was instantaneously added three minutes after the start of stirring. Five minutes after the start, 3 mL of oleyl amine (manufactured by Tokyo Chemical Industry Co., Ltd.) was added. Two minutes after the end of the addition of oleyl amine, the stirring was changed to that with a magnetic stirrer and the temperature of the mixture was increased to 40°C, and then the mixture was aged for 120 minutes. Ten minutes before the end of the aging, the reverse micelle (IV) was added.
After cooling the mixture to room temperature, 3 mL of oleic acid (manufactured by Wako Pure Chemical Industries, Ltd.) was added and mixed, and then the mixture was took out in the air. In order to destroy the reverse micelle, a mixed solution of 450 mL of H₂O and 450 mL of methanol was added to the mixture to separate the aqueous phase and the oil phase. The obtained oil phase was in the state of dispersed metal nanoparticles. The oil phase was washed once with a mixed solution of 900 mL of H₂O and 300 mL of methanol. After that, 300 mL of ethanol was added and the nanoparticles were sedimented by centrifugation at 3000 rpm for 10 minutes. The supernatant liquid was removed, and then 40 mL of heptane (manufactured by Wako Pure Chemical Industries, Ltd.) was added and the nanoparticles were dispersed again. Further, 40 mL of ethanol was added and the same centrifugal operation as described above was conducted to sediment the nanoparticles. This operation was further conducted two times, and finally 6 mL of decane, 10 µl of oleyl amine, and 100 µl of oleic acid were added to give a dispersion (a) of FePt nanoparticles.

### <<Synthesis 2 of nanoparticles>>

A dispersion (b) of FePt nanoparticles was obtained according to the same method as that in the synthesis 1 of nanoparticles, except that the amounts of H₂O in the reverse micelle solutions (I-A), (II-A), (III-A), and (IV) were changed to 9.6 mL, 9.6 mL, 2.4 mL, and 2.4 mL, respectively, in the synthesis 1 of nanoparticles.

### «Synthesis 3 of nanoparticles»

A dispersion (c) of FePt nanoparticles was obtained according to the same method as that in the synthesis 1 of nanoparticles, except that the amounts of H₂O in the reverse micelle solutions (I-A), (II-A), (III-A), and (IV) were changed to 18 mL, 18 mL, 4.5 mL, and 4.5 mL, respectively, in the synthesis 1 of nanoparticles.

### <<Synthesis 4 of nanoparticles>>

The following operations were carried out in the high purity N₂ gas.
To an aqueous metal salt solution in which 0.86 g of ethanedioic acid ammonium iron (III) salt (Fe(NH₄)₃(C₂O₄)₃) (manufactured by Wako Pure Chemical Industries, Ltd.) had been dissolved in 12 mL of H₂O (deoxidation had been treated), a solution of 12.4 g of Aerosol OT in 120 mL of decane was added and mixed to prepare a reverse micelle solution (I-B).

To an aqueous reducing agent solution in which 0.48 g of NaBH₄ had been dissolved in 12 mL of H₂O (deoxidation had been treated), a solution of 12.4 g of Aerosol OT in 120 mL of decane was added and mixed to prepare a reverse micelle solution (II-B).

To an aqueous reducing agent solution in which 0.09 g of L-ascorbic acid (manufactured by Wako Pure Chemical Industries, Ltd.) had been dissolved in 3 mL of H₂O (deoxidation had been treated), a solution of 3.1 g of Aerosol OT in 30 mL of decane was added and mixed to prepare a reverse micelle solution (III-B).

While the reverse micelle solution (II-B) was stirring at high speed with an Omni mixer (trade name, manufactured by Yamato Scientific Co., Ltd.), to which the reverse micelle solution (I-B) was instantaneously added. The reverse micelle solution (III-B) was instantaneously added three minutes after the start of stirring. Five minutes after the start, 3 mL of oleyl amine was added. Two minutes after the end of the addition of oleyl amine, the stirring was changed to that with a magnetic stirrer and the temperature of the mixture was increased to 80°C, and then 5 mL of NH₄OH (28% by mass) from which dissolved oxygen gas had been removed was added and the mixture was aged for 180 minutes.
After cooling the mixture to room temperature, 3 mL of oleic acid was added and mixed, and then the mixture was took out in the air. In order to destroy the reverse micelle, a mixed solution of 450 mL of H₂O and 450 mL of methanol was added to the mixture to separate the aqueous phase and the oil phase. The obtained oil phase was in the state of dispersed metal nanoparticles. The oil phase was washed once with a mixed solution of 900 mL of H₂O and 300 mL of methanol. After that, 300 mL of ethanol was added and the nanoparticles were sedimented by centrifugation at 3000 rpm for 10 minutes. The supernatant liquid was removed, and then 40 mL of heptane was added and the nanoparticles were dispersed again. Further, 40 mL of ethanol was added and the same centrifugal operation as described above was conducted to sediment the nanoparticles. This operation was further conducted two times, and finally 3 mL of decane, 10 µl of oleyl amine, and 100 µl of oleic acid were added to give a dispersion (d) of Fe₁₆N₂ nanoparticles.

### Example 1

### 1. Manufacture of a perpendicular magnetic recording medium

### 1-1. Manufacture of sample A, B, and C

### 1) Formation of soft magnetic layer

Silicone resin (trade name: Torephile R910, manufactured by Dow Corning Toray Silicone Co., Ltd.) was added to each of the dispersions (a), (b), and (d) of nanoparticles in the amount of double as much as the mass of the nanoparticles. About 0.3 mL of each of the dispersions of these nanoparticles was taken and spin coated on the disc type glass support of 2.5 inches in diameter at a room temperature and 4000 rpm conditions. After that, the support was dried at 200°C for 25 minutes. On this support, the spin coating of the dispersions and the drying were repeated once again. Each sample was arranged so as to be longitudinally magnetized in the 70 kOe magnetic field at the atmosphere of N₂ + H₂ (4% by volume) gas and annealed at 500°C for 30 minutes.

### 2) Formation of longitudinally magnetized hard magnetic layer

Silicone resin (trade name: Torephile R910, manufactured by Dow Coming Toray Silicone Co., Ltd.) was added to the dispersion of FePt nanoparticles obtained by the dispersion (c) of nanoparticles in the amount of 0.2 times the mass of the nanoparticles. About 0.3 mL of this dispersion of FePt nanoparticles was taken and spin coated on the soft magnetic layer of the above-mentioned each sample at a room temperature and 4000 rpm conditions. After that, the coated sample was arranged so as to be perpendicularly magnetized in the 70 kOe magnetic field and dried at 200°C for 25 minutes. Further, the sample was arranged so as to be perpendicularly magnetized in the 70 kOe magnetic field at the atmosphere of N₂ + H₂ (4% by volume) gas and annealed at 500°C for 30 minutes.

### 3) Formation of protective layer

On each of the above-mentioned three samples on which the perpendicularly magnetized hard magnetic layers had been formed, a sol composition of organosilane, which had been prepared by the following preparative procedure, was diluted and applied to form the protective layer of 5 nm in thickness.

### <Preparation of sol composition of organosilane>

In a reactor equipped with a stirrer and a reflux condenser, 48 g of acryloyloxypropyl trimethoxysilane, 0.84 g of aluminum diisopropoxide ethyl acetoacetate, 60 g of methyl ethyl ketone, 0.06 g of hydroquinone monomethyl ether, and 11.1 g of water were added and mixed. Then, the mixture was reacted at 60°C for four hours and cooled to room temperature, and a transparent sol composition was obtained.

### 4) Formation of lubricant layer

On each of the above-mentioned three samples on which the protective layers had been formed, a mixture of monolauryl phosphate and stearyl perfluorooctanoate was applied so as to be 3 mg/m², respectively, and the lubricant layers were formed and assumed samples A, B, and C.

1-2. Manufacture of sample D
A perpendicular magnetic recording medium was manufactured and a sample D was obtained according to the same method as that in sample A, except that [3-(2-aminoethylamino)propyl]trimethoxysilane was applied between the soft magnetic layer and the hard magnetic layer so as to form a layer of 5 nm in thickness and the layer was dried at 150°C for 25 minutes to prepare an intermediate layer in the above-mentioned sample A.

### 1-3. Manufacture of comparative sample E

### 1) Formation of soft magnetic layer

An alloy target having a composition of (Co₈₀Pt₂₀)₈₅Cr₁₅ atom % and a CoCrNb target were put within a vacuum chamber in a magnetron sputtering system.
Next, argon gas was introduced into the vacuum chamber and the sputtering of the CoCrNb target was conducted using DC electric power of 500 W under the pressure of 0.133 Pa to form a soft magnetic layer of 90 nm in film thickness on the glass support of 2.5 inches in diameter.

### 2) Formation of the perpendicularly magnetized hard magnetic layer

Further on the soft magnetic layer formed above, the sputtering of a (Co₈₀Pt₂₀)₈₅Cr₁₅ atom % alloy target was conducted using DC electric power of 1.0 kW to form a (Co₈₀Pt₂₀)₈₅Cr₁₅ hard magnetic layer of 80 nm in thickness at the pressure of 1.33 Pa.

### 3) Formation of protective layer

Next, the above sample was put in the plasma injection CVD device manufactured by ASTeX Corporation and a distance between a reaction tube head and the sample was set to be 22 mm. After the vacuum chamber was exhaust to 399 × 10⁻⁶ Pa, ethylene gas and argon gas were introduced at 150 sccm and 50 sccm respectively from the gas feed pipe and the pressure within the reaction tube was made to be 1.33 Pa. In this state, high frequency of 13.56 MHz was impressed to the excitation coil in the reaction tube by the electric power of 450 W and a source gas (ethylene gas) was made plasma. The bias was impressed to the support by -400 V and to the anode electrode by +500 V A carbon protective film was formed so that the film thickness of the center part might become 5 nm.

### 4) Formation of lubricant layer

On the above sample on which the protective layer had been formed, a mixture of monolauryl phosphate and stearyl perfluorooctanoate was applied so as to be 3 mg/m², respectively, and a lubricant layer was formed and assumed sample E.

### 1-4. Manufacture of comparative sample F

Comparative sample F was manufactured according to the same method as that in comparative sample E, except that the soft magnet layer was made as follows in comparative sample E.

### <Formation of soft magnetic layer>

A Fe₄N target instead of the CoCrNb target was put within a vacuum chamber in a magnetron sputtering system. Next, argon gas was introduced into the vacuum chamber and sputtering of the Fe₄N target was conducted using the RF electric power of 400 W at the pressure of 0.133 Pa to form a soft magnetic layer of 90 nm in film thickness on a glass support of 2.5 inches in diameter.

### 1-5. Manufacture of comparative sample G

Comparative sample G was manufactured according to the same method as that in comparative sample E, except that the soft magnet layer and the protective layer were made as follows in comparative sample E.

### <Formation of soft magnetic layer>

A CoPd target instead of the CoCrNb target was put within a vacuum chamber in a magnetron sputtering system. Next, argon gas was introduced into the vacuum chamber and sputtering of the CoPd target was conducted using DC electric power of 500 W at the pressure of 0.133 Pa to form a soft magnetic layer of 90 nm in film thickness on a glass support of 2.5 inches in diameter.

### <Formation of protective layer>

On the above sample, the above-mentioned sol composition of organosilane was diluted and applied to form a protective layer of 5 nm in thickness.

### 1-6. Manufacture of comparative sample H

A perpendicular magnetic recording medium was manufactured and assumed comparative sample H according to the same method as that in comparative sample E, except that DC electric power sputtering of 500 W using a Ru target was conducted to form an intermediate layer of 5 nm in thickness between the soft magnetic layer and the hard magnetic layer in comparative sample E.

### 2. Performance evaluation

### 1) Evaluation items

### <Measurement of coercive force>

The measurement was taken at 25°C and in the applied magnetic field of 790 kA/m (10 kOe) using a high-sensitive magnetic vector measuring instrument manufactured by Toei Industry Co., Ltd. and a DATA processor manufactured by the same company.
Longitudinal coercive force: Coercive force in the state of being magnetized in the longitudinal direction of the magnetic recording medium.
Coercive force in perpendicular direction: Coercive force in the state of being magnetized in the perpendicular direction of the magnetic recording medium.

### <Regeneration output>

The electromagnetic transfer characteristic at 400 kFCI was measured using a single magnetic pole type vertical head. As the measuring device, the spin stand for evaluating the hard disk electromagnetic transfer characteristic (trade name: SS-60, Guzik RWA-1601, manufactured by Kyodo Denshi System Co., Ltd.) was used.

### 2) Evaluation results

As a result, as shown in Table 1, samples A, B, C, and D for the invention showed a higher coercive force in perpendicular direction with respect to their longitudinal coercive force and higher regeneration output than samples E, F, G. and H for the comparative

### examples.

**[Table 1]**

| Sample No. | Soft magnetic layer | Intermediate layer | Longitudinal coercive force (kA/m) | Coercive force in perpendicular direction (kA/m) | Regeneration output TAA (mV) | Remarks |
|---|---|---|---|---|---|---|
| A | Dispersion (a) of nanoparticles | No | 12 | 302 | 3.5 | Invention |
| B | Dispersion (b) of nanoparticles | No | 11 | 296 | 3.8 | Invention |
| C | Dispersion (d) of nanoparticles | No | 14 | 300 | 3.7 | Invention |
| D | Dispersion (a) of nanoparticles | Exist | 12 | 310 | 4.0 | Invention |
| E | Sputtering method (CoCrNb) | No | 10 | 159 | 1.5 | Comparative example |
| F | Sputtering method (Fe₄N) | No | 10 | 140 | 1.4 | Comparative example |
| G | Sputtering method (CoPd) | No | 11 | 167 | 1.8 | Comparative example |
| H | Sputtering method (CoCrNb) | Exist | 12 | 154 | 1.7 | Comparative example |

According to the invention, the perpendicular magnetic recording medium with lower noise and higher density may be provided, compared to the conventional technology. The method for manufacturing the perpendicular magnetic recording medium having such features easily and at low cost may also be provided.
All publications, patent applications, and technical standards mentioned in this specification are herein incorporated by reference to the same extent as if each individual publication, patent application, or technical standard was specifically and individually indicated to be incorporated by reference.

## Claims

1. A perpendicular magnetic recording medium comprising:
at least one soft magnetic layer and at least one hard magnetic layer on at least one surface of a non-magnetic support, wherein the soft magnetic layer comprises magnetic nanoparticles having a longitudinal coercive force of from 1.6 kA/m to 16 kA/m at 25°C.

2. The perpendicular magnetic recording medium according to claim 1, wherein the magnetic nanoparticles contained in the soft magnetic layer comprise iron nitride magnetic nanoparticles represented by the following Formula (a) or alloy magnetic nanoparticles represented by the following Formula (b);
Formula (a): Fe_{100-x-y}Nₓ(Sm or Y)_{y}
Formula (b): Fe₁₀₀₋ₘ₋ₙ(Pt or Co)ₘ(Cu, Ag, or Ni)ₙ,
wherein, x indicates an area of from 10% by atom to 30% by atom, y an area of from 0% by atom to 10% by atom, m an area of from 25% by atom to 75% by atom, and n an area of from 0% by atom to 60% by atom, with the provision that m + n < 100.

3. The perpendicular magnetic recording medium according to claim 2, wherein the magnetic nanoparticles are selected from the group consisting of FePt, FePd, CoPt, Fe₃Pt, Co₃Pt, Ni₃Pt, Fe₂N, Fe₃N, Fe₄N, Fe₁₆YN, Fe₂YN, Fe₁₆SmN, Fe₂SmN, Fe₃SmN, and Fe₁₆N₂.

4. The perpendicular magnetic recording medium according to claim 1, wherein the average particle diameter of the magnetic nanoparticles is from 1 nm to 30 nm.

5. The perpendicular magnetic recording medium according to claim 1, wherein the hard magnetic layer is a nanoparticle magnetic layer that is perpendicularly oriented by being dried in a magnetic field or by being annealed in a magnetic field.

6. The perpendicular magnetic recording medium according to claim 2, wherein the hard magnetic layer is a nanoparticle magnetic layer that is perpendicularly oriented by being dried in a magnetic field or by being annealed in a magnetic field.

7. The perpendicular magnetic recording medium according to claim 1, wherein an intermediate layer is formed between the soft magnetic layer and the hard magnetic layer.

8. The perpendicular magnetic recording medium according to claim 7, wherein the intermediate layer comprises soft magnetic nanoparticles.

9. The perpendicular magnetic recording medium according to claim 7, wherein the soft magnetic layer is a non-magnetic layer.

10. The perpendicular magnetic recording medium according to claim 1, wherein a protective layer is further formed on the hard magnetic layer.

11. The perpendicular magnetic recording medium according to claim 10, further comprising a lubricant layer.

12. A method for manufacturing the perpendicular magnetic recording medium according to claim 1, comprising:
applying the soft magnetic layer and the hard magnetic layer on at least one surface of the support by using a solvent according to a coating method or a dipping method; and drying the coated layer.

13. The method for manufacturing the perpendicular magnetic recording medium according to claim 12, wherein the magnetic nanoparticles contained in the soft magnetic layer comprise iron nitride magnetic nanoparticles represented by the following Formula (a) or alloy magnetic nanoparticles represented by the following Formula (b);
Formula (a): Fe_{100-x-y}Nₓ(Sm or Y)_{y}
Formula (b): Fe₁₀₀₋ₘ₋ₙ(Pt or Co)ₘ(Cu, Ag, or Ni)ₙ,
wherein, x indicates an area of from 10% by atom to 30% by atom, y an area of from 0% by atom to 10% by atom, m an area of from 25% by atom to 75% by atom, and n an area of from 0% by atom to 60% by atom, with the provision that m + n < 100.

14. The method for manufacturing the perpendicular magnetic recording medium according to claim 12, wherein the hard magnetic layer is a nanoparticle magnetic layer that is perpendicularly oriented by being dried in a magnetic field or by being annealed in a magnetic field.

15. The method for manufacturing the perpendicular magnetic recording medium according to claim 12, wherein the method comprises forming an intermediate layer between the soft magnetic layer and the hard magnetic layer by using a solvent according to a coating method or a dipping method.

16. A method for manufacturing the perpendicular magnetic recording medium according to claim 1, comprising:
forming a non-magnetic layer on at least one surface of the support by a coating method;
forming a magnetic layer on the non-magnetic layer under a wet condition or after the non-magnetic layer has been dried; and
drying the formed layers.
